# EUROPEAN PATENT SPECIFICATION

(11) **EP 3 441 735 B1**
(45) Date of publication and mention of the grant of the patent: **02.12.2026**
(21) Application number: 18187880.2
(22) Date of filing: 07.08.2018
(51) Int. Cl.: G01J 5/44

(54) **APPARATUS AND METHOD FOR MEMS RESONANT SENSOR ARRAYS**
VORRICHTUNG UND VERFAHREN FÜR MEMS-RESONANZ-SENSORARRAYS
APPAREIL ET PROCÉDÉ POUR RÉSEAUX DE CAPTEURS RÉSONANTS MEMS

(30) Priority: 10.08.2017 US 201715673553
(43) Date of publication of application: 13.02.2019
(73) Proprietor: Honeywell International Inc., Morris Plains, NJ 07950 (US)
(72) Inventor: TIN, Steven, Morris Plains, NJ 07950 (US)
(74) Representative: Haseltine Lake Kempner LLP

(56) References cited:
- WO-A2-2013/026006
- JP-A- 2005 043 148
- US-A1- 2007 103 742
- US-A1- 2012 286 161
- GOKHALE VIKRANT J ET AL: "Uncooled Infrared Detectors Using Gallium Nitride on Silicon Micromechanical Resonators", JOURNAL OF MICROELECTROMECHANICAL SYSTEMS, IEEE SERVICE CENTER, US, vol. 23, no. 4, 1 August 2014 (2014-08-01), pages 803 - 810, XP011554919, ISSN: 1057-7157, [retrieved on 20140729], DOI: 10.1109/JMEMS.2013.2292368

## Description

### BACKGROUND

Uncooled infrared (IR) sensor arrays measure environmental infrared radiation, and are used for image sensors such as night vision goggles. Uncooled infrared sensor arrays are formed from uncooled IR sensors. Microbolometers are a conventional uncooled IR sensor. Microbolometers have relatively high noise levels because of Johnson, flicker, and thermal fluctuation noise. Such high noise levels limit microbolometer, and thus IR sensor array, sensitivity. As a result, microbolometer and IR sensor array dynamic range is also limited. Therefore, there is a need for infrared sensor arrays using IR sensors having increased sensitivity.

### SUMMARY

An apparatus is provided as defined in claim 1. A method is further provided as defined in claim 7. Preferred embodiments are detailed in the dependent claims.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates a plan view of one embodiment of an array of MEMS infrared resonant sensors;
Figure 2 illustrates a cross section of one embodiment of a MEMS infrared resonant sensor;
Figure 3A illustrates one embodiment of a MEMS infrared resonant sensor array system;
Figure 3B illustrates one embodiment of the resonant frequencies of a pixel;
Figure 4 illustrates one embodiment of a detector;
Figure 5 illustrates a shutter system over a sensor array; and
Figure 6 illustrates one embodiment of a method of operation of MEMS infrared sensor array.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A micro-electro-mechanical system (MEMS) infrared (IR) resonant sensor may be used to overcome the above referenced problem. Embodiments of the MEMS IR sensor have at least one advantage: lower noise. MEMS IR resonant sensors have lower noise because they are only limited by thermal fluctuation noise. Although MEMS IR resonant sensors are illustrated for pedagogical purposes, the embodiments described herein are applicable to MEMS resonant sensors (and arrays of MEMS resonant sensors). A MEMS resonant sensor is a sensor whose resonant frequency varies based upon the amount of incident signals of interest, which includes but not limited to infrared sensors, mass sensors, gas sensors, temperature sensors, inertial sensors, and magnetic sensor. Examples of MEMS IR resonant sensors can be found in the patent documents US20120286161, WO2013026006 and JP2005043148 and from the article "Uncooled infrared detectors using gallium nitride on silicon micromechanical resonators", Gokhale et al., IEEE 2013.

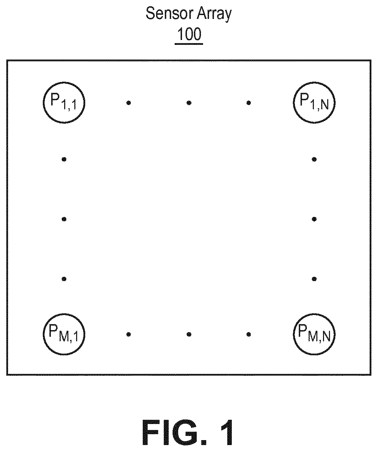

Figure 1 illustrates a plan view of one embodiment of an array of MEMS infrared resonant sensors (sensor array) 100. In the illustrated embodiment, the array 100 has M rows and N columns with a total of M time N pixels shown as pixels P_{1,1} through P_{M,N}. Each MEMS infrared resonant sensor may be referred to herein as a pixel P. In another embodiment, each of M and N are greater than one.

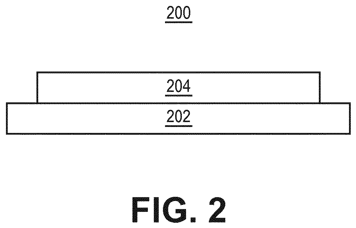

Figure 2 illustrates a cross section of one embodiment of a MEMS infrared resonant sensor 200. The MEMS infrared resonant sensor 200 comprises a resonator 202 and an absorber 204. In another embodiment, the resonator 202 includes a material that converts mechanical energy to electrical energy (and vice versa), such as a bulk mode piezoelectric (e.g. aluminum nitride, gallium nitride, Y-cut quartz, and lithium niobate). The MEMS infrared resonant sensor 200 resonates at a resonant frequency that is dependent upon the dimensions and the temperature of the resonator 202.

In one embodiment, the absorber 204 is a dielectric (*e.g.* a polymer) which absorbs, *e.g.* IR wavelengths, energy, generating heat, and thus increasing the temperature of the resonator 202. Due to its change in temperature, the resonant frequency of the MEMS infrared resonant sensor 200 changes. In another embodiment, the absorber 204 is deposited on the resonator 202 using conventional semiconductor manufacturing techniques.

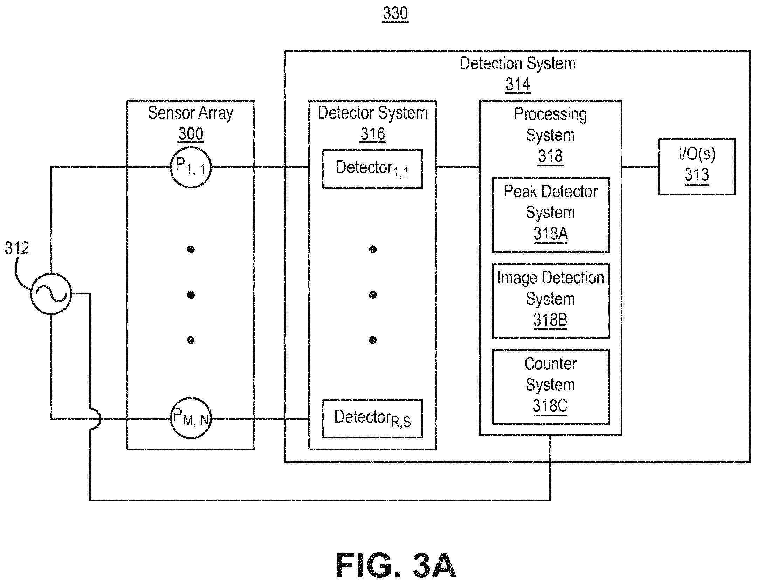

Figure 3A illustrates one embodiment of a MEMS infrared resonant sensor array system (sensor system) 330. The sensor system 330 includes an array of MEMS infrared resonant sensors (sensor array) 300 coupled to a signal generator system 312 and a detection system 314. In another embodiment, the sensor array 300 is implemented as described above with respect to Figure 1.

In one embodiment, the signal generator system 312 generates a periodic frequency chirp signal (or periodic chirp) in the operating frequency range of the MEMS infrared sensors 200 in the sensor array 300, that increases in frequency (*e.g.* from 800 MHz to 1000 MHz) with time or decreases in frequency with time. In another embodiment, the periodic chirp has a frequency that linearly increases or decreases with time. Alternatively, the periodic chirp has a frequency that non-linearly increases or decreases with time. In a further embodiment, the signal generator system 312 includes one signal generator coupled to all pixels of the sensor array 300. In yet another embodiment, the signal generator system 312 includes two or more signal generators; for example, one signal generator may be uniquely coupled to a pixel of the sensor array 300.

Signal generators, such as signal generators that generate periodic chirps, may be fabricated on the same substrate as IR detectors via CMOS technologies. In one embodiment, signal generators are constructed with 555 timer circuity and/or operational amplifiers.

The periodic chirp is propagated to the sensor array 300. The resonant frequency of one or more pixels P may be shifted due to infrared radiation incident on the one or more pixels P. The resulting signal output from the sensors array 300 reflects the shifted resonant frequenc(ies). This signal output from the sensor array 300 is propagated to the detector system 316 which determines the time or frequency of the peak amplitude of the, e.g. voltage or power, of the signal. If time is determined, then it is converted to frequency because each frequency of the periodic chirp corresponds to a unique time during the chirp.

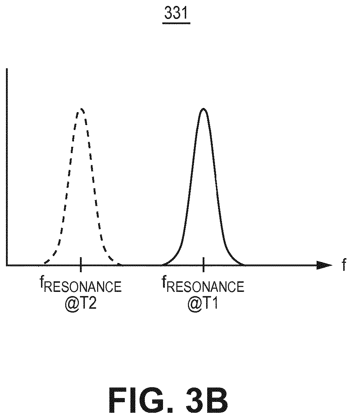

The shift in resonant frequency of a pixel P will now be illustrated. Figure 3B illustrates one embodiment of the resonant frequencies of a pixel P 331. At a first temperature T1, *e.g.* room temperature, the resonant frequency of the MEMS infrared sensor 200 is f_{RESONANCE @ T1}. When IR is incident upon the MEMS infrared sensor 200, the temperature of the MEMS infrared sensor 200 increases to a second temperature T2. Temperature T2 is larger than temperature T1. Because materials which may be used to make the resonator 202 have negative temperature coefficient of resonant frequency, the resonant frequency at the second temperature T2 (f_{RESONANCE @ T2}) is less than f_{RESONANCE @ T1}. In another embodiment, materials may be used that have a positive temperature coefficient of resonant frequency.

Returning to Figure 3A, in one embodiment, the detection system 314 includes a detector system 316 coupled to a processing system 318. In another embodiment, as illustrated in Figure 3A, the detector system 316 includes an array of R by S detectors comprising detector_{1,1} 316a through detector_{R,S} 316n; each pixel P in the sensor array 300 is coupled to a unique detector.

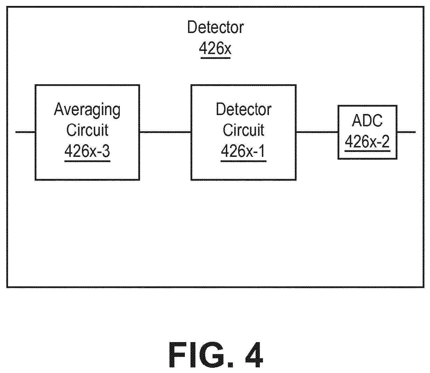

Figure 4 illustrates one embodiment of a detector 416x. Each of the one or more detectors of the detector system 316 includes a detector circuit 416x-1 that generates an analog (voltage or current) signal related, e.g. proportional, to respectively the voltage or power incident on such detector circuit. In another embodiment, an analog to digital converter (ADC) 416x-2 is coupled to the output of one or more a detector circuits. In a further embodiment, a multiplexer may couple the output of two or more detector circuits to the input of the ADC 416x-2; each detector circuit is coupled to the ADC 416x-2 sequentially. Each analog to digital converter converts the analog signals generated by a detector circuit 416x-1 to digital signals that can be readily processed by digital systems.

Returning to Figure 3A, in an alternate embodiment, the detection system 316 comprises at least one multiplexer coupled to two or more pixels. For example, a single multiplexer can be coupled to each pixel in the sensor array 300 and to a single detector. Using multiplexer(s), the detection system 316 can process signals from all pixels over time.

Returning to Figure 4, in one embodiment, the detector 416x includes an averaging circuit 416x-3, such as an integrator circuit. The averaging circuit 426x-3 averages the resonant frequencies of pixel(s) over two or more periodic chirps. In the illustrated embodiment, the averaging circuit 416 is coupled between the sensor array 300 and a detector circuit 416x-1. Alternatively, in another embodiment, the averaging circuit 416x-3 can be coupled between the detector circuit 416x-1 and the ADC 416x-2.

Returning to Figure 3, in one embodiment, the illustrated processing system 318 is implemented with a state machine such as a processor coupled to a memory. In another embodiment, a field programmable gate array and/or an application specific integrated circuit can be used in lieu of all or part of the processor and memory. In a further embodiment, the memory can be implemented with random access memory, read only memory, flash memory, and/or magnetic memory.

In one embodiment, the processing system 318 includes a peak detector system 318A, an image detection system 318B, and a counter system 318C. In another embodiment, the peak detector system 318A, the image detection system 318B, and the counter system 318C are stored and executed by the processing system 318. In a further embodiment, the counter system 318C is coupled to the signal generator system 312. In a further embodiment, the counter system 318C is a counter circuit. The counter system 318C may alternatively be located in the signal generator system 312, or elsewhere. The counter frequency is high enough to provide the desired frequency resolution, e.g. 1 Hz or less, to accurately determine the shift of the resonant frequency of the MEMS infrared resonant sensor.

The signal generator system 312 is configured to signal the counter system 318C to commence counting, e.g. from zero, at the commencement of each periodic chirp generated by the signal generator system 312. After a periodic chirp is completed, the counter system 318C resets and restarts counting, e.g. from zero, upon the commencement of a following periodic chirp. Each count corresponds to a frequency bin, or range, within the periodic chip.

The peak detector system 318A is configured to identify the resonant frequency of each pixel P in the sensor array 300. In one embodiment, for each pixel P in the sensor array 300, the peak detector system 318A identifies and stores the count of the counter system 318C corresponding to the maximum, or peak, measured amplitude. Using formulae and/or a lookup table database in the peak detection system 318A, the peak detection system 318A uses the stored count for each pixel to determine the corresponding frequency of the periodic chirp which is substantially the resonant frequency of that MEMS infrared resonant sensor. If the periodic chirp is linear, then the resonant frequency is defined by the measured count multiplied by a constant; for example, the constant would be the frequency range of the periodic chirp divided by the count range. The peak detector system 318A communicates the resonant frequency for each pixel P to the image detection system 318B.

Database as used herein means a conventional database or any other data storage technique, including a use of data files and/or registers. Two or more databases described herein may be combined into a single database.

In an alternative embodiment, the peak detector system 318A includes at least one fast Fourier transform (FFT(s)) (*e.g.*, stored in the peak detector system 318A, and executed by the processing system 318). For example, with each chirp period, an FFT is performed on the output of the detector system 316 for each pixel, generating R bins of data. Each bin corresponds to a range of frequencies in the frequency range of the periodic chirp. In another embodiment, the bandwidth of each bin equals the frequency range of the periodic chirp divided by R. R may be selected by the system designer. For each cycle, the peak detector system 318A determines the bin having the largest amplitude. In yet a further embodiment, for each periodic chirp, the center frequency of the bin having the largest amplitude is identified as the resonant frequency for the corresponding pixel P. The peak detector system 318A communicates the resonant frequency for each pixel P to the image detection system 318B.

The image detection system 318B is configured to determine the amplitude (*e.g.* the power) of incident infrared radiation upon each pixel P based upon resonant frequency shift. More specifically, as will be subsequently described, the image detection system 318B is configured to determine infrared radiation power incident upon each pixel P based upon a difference between the determined resonant frequency and a corresponding reference resonant frequency.

In one embodiment, the image detection system 318B includes a reference database that stores the resonant frequencies of each pixel P of the sensor array 300 when no infrared radiation is incident on the pixels; such resonant frequencies are termed reference resonant frequencies. The reference database, however, may be located elsewhere in the processing system 318. One method of obtaining reference resonant frequencies will be subsequently described.

The image detection system 318B determines the difference between the measured resonant frequency and the reference resonant frequency for each pixel P. For example, the difference is the reference resonant frequency subtracted from the measured resonant frequency. The difference is the resonant frequency shift. Using formulae and/or a lookup table database in the image detection system 318B, image detection system 318B determines the incident infrared power upon each pixel P.

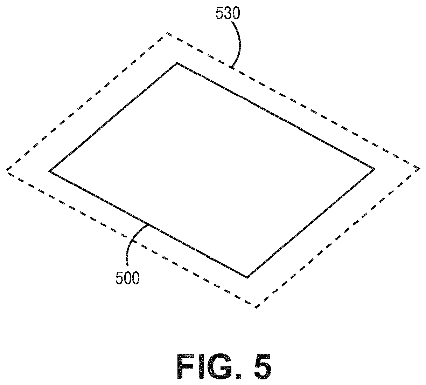

To compensate for varying environmental conditions (such as varying temperature) or time varying changes in pixel P performance (such as long term pixel resonant frequency drift due to sensor array 300 aging and/or degradation), the reference resonant frequency for each pixel P must be continuously or periodically re-measured. To accomplish this, in one embodiment, the sensor system 330 includes a shutter system 530 that isolates the sensor array 300 from incident infrared radiation. Figure 5 illustrates the shutter system 530 over the sensor array 300. The shutter system 530 comprises a shutter. The shutter may be an electro-mechanical shutter akin to what is used in a camera. Alternatively, the shutter may be an electro-optical shutter, *e.g.* made from a liquid metal, liquid crystal, and/or other materials that can be electrically activated to block infrared radiation. In another embodiment, the shutter system 530 is coupled to the processing system 318 which controls the opening and closing of the shutter, *e.g.* with he image detection system 318B. The shutter is closed when the calibration is to be performed, *e.g.* determination of the reference resonant frequencies. In a further embodiment, the shutter system 530 includes a driver circuit which is configured to be coupled to the processing system 318 to convert digital control signals from the processing system 318 to analog signals that open and close the shutter.

When the shutter is activated, the infrared radiation is blocked from being incident upon the pixels P of the sensor array 300. The reference resonant frequencies of each pixel P (in the absence of infrared radiation) are measured using one of the techniques described above, and stored in the reference database. In one embodiment, the reference resonant frequencies are characterized prior to each measurement of environmental infrared radiation. However, the reference resonant frequencies need not be characterized that often, and can be measured periodically as often as needed, for example as controlled by the processing system and/or determined by a system designer.

Optionally, in one embodiment, a scale factor for each pixel may be measured. The scale factor is determined by having infrared radiation of an identical, constant power level incident upon each pixel P. If pixels generate different resonant frequencies, a scale factor can be calculated for each pixel. The scale factor for each pixel P is to be multiplied, e.g. by the detected voltage or power level or an initial determined resonant frequency corresponding to the respective pixel, to ensure that the same resonant frequency is determined for each pixel when the identical, constant infrared power level is incident upon the pixel P. For future measurements, the detected voltage or power level or determine resonant frequency for each pixel is multiplied by the scale factor so that, at least to first order, each pixel P has the same response to incident infrared radiation. Scale factors can be stored, *e.g.* in a scale factor database, in the processing system 318, for example in the image detection system 318B.

In one embodiment, scale factor calibration is performed in either the detector system 316 or the processing system 318, *e.g.* the image detection system 318B. Scale factor calibration can be performed as often as needed for a given application.

Returning to Figure 3A, in one embodiment, at least one input / output device (I/O(s)) 313 is coupled to the processing system 318. The I/O(s) 313 can transmit and receive data and commands respectively generated by and externally for the sensor system 330. The I/O(s) 313 include a modem, a display (such as a touch screen), a keyboard, a cursor control device (such as a mouse), a speaker, and/or a microphone and voice recognition system. For example, the data can be transmitted to and received from a user that may be another system and/or a human being. In another embodiment, the I/O(s) 313 can be used to output, *e.g.* display the infrared radiation power levels incident upon the sensor array 300, for example as used in night vision goggles.

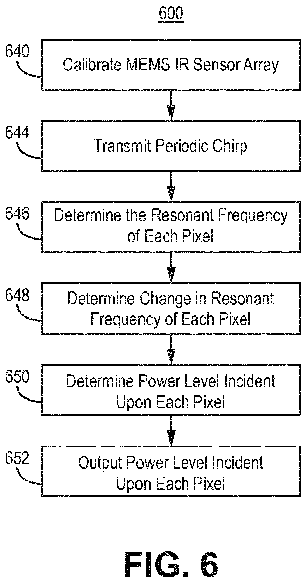

Figure 6 illustrates one embodiment of a method of operation of MEMS IR sensor array 600. To the extent that the embodiment of method 600 shown in Figure 6 is described herein as being implemented in the systems shown in Figures 1A through 2D, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figure) can occur in a different order (for example, where at least some of the processing associated with the blocks is performed in parallel and/or in an event-driven manner). Although infrared is referenced with respect to Figure 6 for pedagogical reasons, the illustrated method is applicable to other MEMS resonant sensors.

In one embodiment, in one embodiment, in block 640, calibrate an MEMS infrared sensor array. In another embodiment, calibrate by generating a reference resonant frequency for each pixel of the MEMS infrared sensor array, *e.g.* by closing a shutter and determining the resonant frequency of each pixel (as is further described above). In a further embodiment, perform calibration by performing the following blocks 644 and 646 when the shutter is closed. In yet another embodiment, calibrate by generating a scale factor for each pixel of the MEMS infrared sensor array, *e.g.* as described above.

In block 644, transmit the periodic chirp to at least two pixels, *e.g.* some or all, pixels, in the sensor array. In block 646, determine resonant frequency of each pixel receiving the periodic chirp, *e.g.* as described above. In block 648, determine a change in resonant frequency of each pixel receiving the periodic chirp, *e.g.* as described above. In block 650, determine a power level, *e.g.* of infrared radiation, incident upon each pixel receiving the periodic chirp, *e.g.* as described above. In one embodiment, in block 652, *e.g.* for the periodic chirp, output the power level incident upon each pixel.

### Example Embodiments

Example 1 includes an apparatus, comprising: a signal generator system configured to generate periodic chirps; a detector system; a MEMS resonant sensor array comprising at least two MEMS resonant sensors coupled to the signal generator system and the detector system; and a processing system coupled to the detector system.

Example 2 includes the apparatus of Example 1, wherein the detector system comprises at least one detector.

Example 3 includes the apparatus of Example 2, wherein each detector comprises: a detector circuit; and an analog to digital converter coupled to the detector circuit.

Example 4 includes the apparatus of any of the Examples 1-3, wherein the processing system comprises: a peak detector system configured to determine a resonant frequency of each pixel in the MEMS resonant sensor array; an image detection system configured to determine infrared radiation power incident upon each pixel P based upon a difference between the determined resonant frequency and a corresponding reference resonant frequency; and wherein the image detection system comprises at least one of a reference database and a scale factor database.

Example 5 includes the apparatus of Example 4, wherein the apparatus further comprises a counter system coupled to the signal generator.

Example 6 includes the apparatus of any of Examples 1-5, further comprising a shutter system.

Example 7 includes the apparatus of Example 6, wherein the shutter system comprises an electro-optical shutter.

Example 8 includes the apparatus of any of Examples 1-7, wherein the periodic chirps linearly increase in frequency during each period.

Example 9 includes the apparatus of any of Examples 1-8, wherein each MEMS resonant sensor comprises: a resonator; and an absorber on the resonator.

Example 10 includes the apparatus of Example 9, wherein the absorber is an infrared absorber.

Example 11 includes an apparatus, comprising: a signal generator system configured to generate periodic chirps; a detector system comprising at least one detector, wherein each of the at least one detectors comprises a detector circuit coupled to an analog to digital converter; an infrared MEMS resonant sensor array comprising M rows and N columns of MEMS infrared resonant sensors coupled to the signal generator system and the detector system; and a processing system, coupled to the detector system, comprising: a peak detector system configured to determine a resonant frequency of each pixel in the MEMS resonant sensor array; an image detection system configured to determine infrared radiation power incident upon each pixel P based upon a difference between the determined resonant frequency and a corresponding reference resonant frequency; and wherein the processing system comprises at least one of a reference database and a scale factor database.

Example 12 includes the apparatus of Example 11, wherein the apparatus further comprises a shutter system coupled to the processing system.

Example 13 includes the apparatus of Example 12, wherein the shutter system comprises an electro-optical shutter.

Example 14 includes the apparatus of any of Examples 11-13, wherein the apparatus further comprises a counter coupled to the signal generator.

Example 15 is a method, comprising: transmitting a periodic chirp to at least two pixels of a MEMS sensor array; determining a resonant frequency of each MEMS resonant sensor receiving the periodic chirp; determining the change in resonant frequency of each MEMS resonant sensor receiving the periodic chirp; and determining a power level incident upon each pixel receiving the periodic chirp.

Example 16 includes the method of Example 15, further comprising calibrating the MEMS sensor array.

Example 17 includes the method of Example 16, where in calibrating comprises generating a reference resonant frequency for each MEMS resonant sensor.

Example 18 includes the method of any of Examples 15-17, wherein determining the power level comprises determining a difference between the determined resonant frequency and a reference resonant frequency.

Example 19 includes the method of any of Examples 15-18, wherein generating a periodic chirp comprises generating a periodic chirp having a linearly increasing frequency during a period.

Example 20 includes the method of any of Examples 15-19, wherein determining the resonant frequency comprises: identifying a count corresponding to a maximum measured amplitude detected from a MEMS resonant sensor; and converting the count to a resonant frequency of that MEMS resonant sensor.

Terms of relative position as used in this application are defined based on a plane parallel to, or in the case of the term coplanar - the same plane as, the conventional plane or working surface of a layer, wafer, or substrate, regardless of orientation. The term "horizontal" or "lateral" as used in this application are defined as a plane parallel to the conventional plane or working surface of a layer, wafer, or substrate, regardless of orientation. The term "vertical" refers to a direction perpendicular to the horizontal. Terms such as "on," "side" (as in "sidewall"), "higher," "lower," "over" , "top," and "under" are defined with respect to the conventional plane or working surface being on the top surface of a layer, wafer, or substrate, regardless of orientation. The term "coplanar" as used in this application is defined as a plane in the same plane as the conventional plane or working surface of a layer, wafer, or substrate, regardless of orientation.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An apparatus, comprising:
a signal generator system (312) configured to generate a periodic chirp signal;
a detector system (316);
a MEMS resonant sensor array (300) comprising at least two pixels coupled to the signal generator system and the detector system, wherein each pixel comprises an absorber (204) on a resonator (202), wherein the resonator (202) comprises piezoelectric material, wherein the absorber is configured to absorb incident infrared radiation, convert absorbed incident infrared radiation into heat, and change a resonant frequency of the resonator (202), and wherein each of the at least two pixels is configured to receive the periodic chirp signal;
a processing system (318) coupled to the detector system;
a shutter system coupled to the processing system, and configured, when activated, to isolate the MEMs resonant sensor array from the incident infrared radiation;
wherein the apparatus is configured to determine a determined resonant frequency for each pixel; and
wherein the apparatus is configured to determine a reference resonant frequency for each pixel when the shutter system is activated;
wherein the processing system is configured to determine infrared radiation power incident upon each pixel based upon a difference between the reference resonant frequency and the determined resonant frequency; and
wherein the processing system (318) includes a peak detector system (318A) adapted to use a Fast Fourier transform, FFT, so that with each chirp period a FFT is performed on the output of the detector system (316) for each pixel, generating bins of data, each bin corresponding to a range of frequencies in the frequency range of the periodic chirp signal.

2. The apparatus of claim 1, wherein the processing system (318) comprises:
the peak detector system (318A) configured to determine a resonant frequency of each pixel in the MEMS resonant sensor array (300);
an image detection system (318B) configured to determine infrared radiation power incident upon each pixel based upon a difference between the determined resonant frequency and a corresponding reference resonant frequency; and
wherein the image detection system comprises at least one of a reference database and a scale factor database.

3. The apparatus of claim 1, wherein the apparatus further comprises a counter system (318C) coupled to the signal generator (312), where the counter system is configured to identify a count corresponding to a maximum measured amplitude detected from a pixel.

4. The apparatus of claim 1, wherein the periodic chirps linearly increase in frequency during a corresponding period.

5. The apparatus of claim 1, wherein the shutter system (530) comprises an electro-optical shutter.

6. The apparatus of claim 1, wherein the apparatus is configured to determine a scale factor for each pixel by having infrared radiation of an identical, constant power level incident upon each pixel and if pixels generate different resonant frequencies, the scale factor is calculated for each pixel and then multiplied by a detected voltage or power level or an initial determined resonant frequency corresponding to the respective pixel to ensure that the same resonant frequency is determined for each pixel.

7. A method, comprising:
calibrating a MEMS resonant sensor array (640) by isolating the MEMs resonant sensor array from incident radiation when a shutter is closed and determining reference resonant frequencies of each pixel in the MEMS resonant sensor array;
transmitting a periodic chirp signal to at least two pixels of a MEMS resonant sensor array (644), wherein each pixel comprises an absorber (204) on a resonator (202), wherein the resonator (202) comprises piezoelectric material, wherein the absorber is configured to absorb incident infrared radiation, convert absorbed incident infrared radiation into heat, and change a resonant frequency of the resonator (202), and wherein each of the at least two pixels is configured to receive the periodic chirp signal;
determining a determined resonant frequency of each pixel receiving the periodic chirp signal (646);
determining the difference in resonant frequency relative to the corresponding reference resonant frequency of each pixel receiving the periodic chirp signal (648);
determining infrared radiation power incident upon each pixel receiving the periodic chirp signal (650) based upon the difference between the determined resonant frequency and the reference resonant frequency; and
using a Fast Fourier transform, FFT, with a peak detector system (318A) so that with each chirp period a FFT is performed on the output of a detector system (316) for each pixel, generating bins of data, each bin corresponding to a range of frequencies in the frequency range of the periodic chirp signal.

8. The method of claim 7, wherein generating a periodic chirp signal comprises generating a periodic chirp signal having a linearly increasing frequency during a corresponding period.

9. The method of claim 7, wherein determining the resonant frequency comprises:
identifying a count corresponding to a maximum measured amplitude detected from a pixel; and
converting the count to a resonant frequency of that pixel.

10. The method of claim 7, wherein the method further comprises determining a scale factor for each pixel by having infrared radiation of an identical, constant power level incident upon each pixel and if pixels generate different resonant frequencies, the scale factor is calculated for each pixel and then multiplied by a detected voltage or power level or an initial determined resonant frequency corresponding to the respective pixel to ensure that the same resonant frequency is determined for each pixel

## Patentansprüche

1. Gerät, umfassend:
ein Signalgeneratorsystem (312), das dazu konfiguriert ist, ein periodisches Chirp-Signal zu generieren;
ein Detektorsystem (316);
ein MEMS-Resonanzsensorarray (300), das mindestens zwei Pixel umfasst, die mit dem Signalgeneratorsystem und dem Detektorsystem gekoppelt sind, wobei jedes Pixel einen Absorber (204) auf einem Resonator (202) umfasst, wobei der Resonator (202) piezoelektrisches Material umfasst, wobei der Absorber dazu konfiguriert ist, einfallende Infrarotstrahlung zu absorbieren, absorbierte einfallende Infrarotstrahlung in Wärme umzuwandeln und eine Resonanzfrequenz des Resonators (202) zu ändern, und wobei jedes der mindestens zwei Pixel dazu konfiguriert ist, das periodische Chirp-Signal zu empfangen;
ein Verarbeitungssystem (318), das mit dem Detektorsystem gekoppelt ist;
ein Verschlusssystem, das mit dem Verarbeitungssystem gekoppelt ist, und dazu konfiguriert ist, wenn es aktiviert ist, das MEMS-Resonanzsensorarray von der einfallenden Infrarotstrahlung abzuschirmen;
wobei das Gerät dazu konfiguriert ist, eine bestimmte Resonanzfrequenz für jedes Pixel zu bestimmen; und
wobei das Gerät dazu konfiguriert ist, eine bestimmte Referenzresonanzfrequenz für jedes Pixel zu bestimmen, wenn das Verschlusssystem aktiviert ist;
wobei das Verarbeitungssystem dazu konfiguriert ist, die auf jedes Pixel einfallende Infrarotstrahlungsleistung basierend auf einer Differenz zwischen der Referenzresonanzfrequenz und der bestimmten Resonanzfrequenz zu bestimmen; und
wobei das Verarbeitungssystem (318) ein Spitzenwertdetektorsystem (318A) einschließt, das dazu konfiguriert ist, eine schnelle Fourier-Transformation, FFT, zu verwenden, sodass bei jeder Chirp-Periode für jedes Pixel eine FFT auf das Ausgangssignal des Detektorsystems (316) durchgeführt wird, wodurch Datenbins generiert werden, wobei jedes Bin einem Frequenzbereich innerhalb des Frequenzbereichs des periodischen Chirp-Signals entspricht.

2. Gerät nach Anspruch 1, wobei das Verarbeitungssystem (318) umfasst:
das Spitzenwertdetektorsystem (318A), das dazu konfiguriert ist, eine Resonanzfrequenz jedes Pixels in dem MEMS-Resonanzsensorarray (300) zu bestimmen;
ein Bilddetektionssystem (318B), das dazu konfiguriert ist, die auf jedes Pixel einfallende Infrarotstrahlungsleistung basierend auf einer Differenz zwischen der bestimmten Resonanzfrequenz und einer entsprechenden Referenzresonanzfrequenz zu bestimmen; und
wobei das Bilddetektionssystem mindestens eine von einer Referenzdatenbank und einer Skalierungsfaktor-Datenbank umfasst.

3. Gerät nach Anspruch 1, wobei das Gerät ferner ein Zählsystem (318C) umfasst, das mit dem Signalgenerator (312) gekoppelt ist, wobei das Zählsystem dazu konfiguriert ist, einen Zählwert zu identifizieren, der einer maximalen gemessenen Amplitude entspricht, die an einem Pixel detektiert wurde.

4. Gerät nach Anspruch 1, wobei sich die Frequenz der periodischen Chirps während einer entsprechenden Periode linear erhöht.

5. Gerät nach Anspruch 1, wobei das Verschlusssystem (530) einen elektrooptischen Verschluss umfasst.

6. Gerät nach Anspruch 1, wobei das Gerät dazu konfiguriert ist, einen Skalierungsfaktor für jedes Pixel zu bestimmen, indem jedes Pixel Infrarotstrahlung mit identischer, konstanter Leistung aufweist, und wenn Pixel unterschiedliche Resonanzfrequenzen generieren, der Skalierungsfaktor für jedes Pixel berechnet und anschließend mit einer detektierten Spannung oder Leistung oder einer anfänglich bestimmten Resonanzfrequenz multipliziert wird, die dem jeweiligen Pixel entspricht, um sicherzustellen, dass für jedes Pixel dieselbe Resonanzfrequenz bestimmt wird.

7. Verfahren, umfassend:
Kalibrieren eines MEMS-Resonanzsensorarrays (640) durch Abschirmen des MEMS-Resonanzsensorarrays von einfallender Strahlung, wenn ein Verschluss geschlossen ist, und Bestimmen von Referenzresonanzfrequenzen jedes Pixels im MEMS-Resonanzsensorarray;
Übertragen eines periodischen Chirp-Signals an mindestens zwei Pixel eines MEMS-Resonanzsensorarrays (644), wobei jedes Pixel einen Absorber (204) auf einem Resonator (202) umfasst, wobei der Resonator (202) piezoelektrisches Material umfasst, wobei der Absorber dazu konfiguriert ist, einfallende Infrarotstrahlung zu absorbieren, absorbierte einfallende Infrarotstrahlung in Wärme umzuwandeln und eine Resonanzfrequenz des Resonators (202) zu ändern, und wobei jedes der mindestens zwei Pixel dazu konfiguriert ist, das periodische Chirp-Signal zu empfangen;
Bestimmen einer bestimmten Resonanzfrequenz jedes Pixels, das das periodische Chirp-Signal (646) empfängt;
Bestimmen der Differenz der Resonanzfrequenz im Verhältnis zur entsprechenden Referenzresonanzfrequenz jedes Pixels, das das periodische Chirp-Signal (648) empfängt;
Bestimmen der auf jedes Pixel, das das periodische Chirp-Signal (650) empfängt, einfallenden Infrarotstrahlungsleistung basierend auf der Differenz zwischen der bestimmten Resonanzfrequenz und der Referenzresonanzfrequenz; und
Verwenden einer schnellen Fourier-Transformation, FFT, mit einem Spitzenwertdetektorsystem (318A), sodass bei jeder Chirp-Periode für jedes Pixel eine FFT auf das Ausgangssignal eines Detektorsystems (316) durchgeführt wird, wodurch Datenbins generiert werden, wobei jedes Bin einem Frequenzbereich innerhalb des Frequenzbereichs des periodischen Chirp-Signals entspricht.

8. Verfahren nach Anspruch 7, wobei Generieren eines periodischen Chirp-Signals Generieren eines periodischen Chirp-Signals umfasst, das eine sich linear erhöhende Frequenz während einer entsprechenden Periode aufweist.

9. Verfahren nach Anspruch 7, wobei Bestimmen der Resonanzfrequenz umfasst:
Identifizieren eines Zählwerts, der einer maximalen gemessenen Amplitude entspricht, die an einem Pixel detektiert wurde; und
Umwandeln eines Zählwerts in eine Resonanzfrequenz dieses Pixels.

10. Verfahren nach Anspruch 7, wobei das Verfahren ferner Bestimmen eines Skalierungsfaktors für jedes Pixel umfasst, indem jedes Pixel Infrarotstrahlung mit identischer, konstanter Leistung aufweist, und wenn Pixel unterschiedliche Resonanzfrequenzen generieren, der Skalierungsfaktor für jedes Pixel berechnet und anschließend mit einer detektierten Spannung oder Leistung oder einer anfänglich bestimmten Resonanzfrequenz multipliziert wird, die dem jeweiligen Pixel entspricht, um sicherzustellen, dass für jedes Pixel dieselbe Resonanzfrequenz bestimmt wird.

## Revendications

1. Appareil, comprenant :
un système générateur de signal (312) configuré pour générer un signal chirp périodique ;
un système détecteur (316) ;
un réseau de capteurs résonants MEMS (300) comprenant au moins deux pixels couplés au système générateur de signal et au système détecteur, dans lequel chaque pixel comprend un absorbeur (204) sur un résonateur (202), dans lequel le résonateur (202) comprend un matériau piézoélectrique, dans lequel l'absorbeur est configuré pour absorber le rayonnement infrarouge incident, convertir le rayonnement infrarouge incident absorbé en chaleur, et changer une fréquence de résonance du résonateur (202), et dans lequel chacun des au moins deux pixels est configuré pour recevoir le signal chirp périodique ;
un système de traitement (318) couplé au système détecteur ;
un système d'obturation couplé au système de traitement, et configuré, lorsqu'il est activé, pour isoler le réseau de capteurs résonants MEMS du rayonnement infrarouge incident ;
dans lequel l'appareil est configuré pour déterminer une fréquence de résonance déterminée pour chaque pixel ; et
dans lequel l'appareil est configuré pour déterminer une fréquence de résonance de référence pour chaque pixel lorsque le système d'obturation est activé ;
dans lequel le système de traitement est configuré pour déterminer une puissance de rayonnement infrarouge incidente sur chaque pixel sur la base d'une différence entre la fréquence de résonance de référence et la fréquence de résonance déterminée ; et
dans lequel le système de traitement (318) inclut un système détecteur de crête (318A) adapté pour utiliser une transformée de Fourier rapide, FFT, de sorte qu'avec chaque période de chirp, une FFT est réalisée sur la sortie du système détecteur (316) pour chaque pixel, générant des compartiments de données, chaque compartiment correspondant à une plage de fréquences dans la plage de fréquences du signal chirp périodique.

2. Appareil selon la revendication 1, dans lequel le système de traitement (318) comprend :
le système détecteur de crête (318A) configuré pour déterminer une fréquence de résonance de chaque pixel dans le réseau de capteurs résonants MEMS (300) ;
un système de détection d'image (318B) configuré pour déterminer une puissance de rayonnement infrarouge incidente sur chaque pixel sur la base d'une différence entre la fréquence de résonance déterminée et une fréquence de résonance de référence correspondante ; et
dans lequel le système de détection d'image comprend au moins une d'une base de données de référence et d'une base de données de facteurs d'échelle.

3. Appareil selon la revendication 1, dans lequel l'appareil comprend en outre un système de comptage (318C) couplé au générateur de signal (312), où le système de comptage est configuré pour identifier un compte correspondant à une amplitude mesurée maximale détectée à partir d'un pixel.

4. Appareil selon la revendication 1, dans lequel les chirps périodiques augmentent de manière linéaire en fréquence au cours d'une période correspondante.

5. Appareil selon la revendication 1, dans lequel le système d'obturation (530) comprend un obturateur électro-optique.

6. Appareil selon la revendication 1, dans lequel l'appareil est configuré pour déterminer un facteur d'échelle pour chaque pixel en ayant un rayonnement infrarouge d'un niveau de puissance constant identique incident sur chaque pixel et si les pixels génèrent des fréquences de résonance différentes, le facteur d'échelle est calculé pour chaque pixel et multiplié ensuite par une tension ou un niveau de puissance détecté(e) ou une fréquence de résonance déterminée initiale correspondant au pixel respectif pour garantir que la même fréquence de résonance est déterminée pour chaque pixel.

7. Procédé, comprenant :
l'étalonnage d'un réseau de capteurs résonants MEMS (640) en isolant le réseau de capteurs résonants MEMS du rayonnement incident lorsqu'un obturateur est fermé et en déterminant des fréquences de résonance de référence de chaque pixel dans le réseau de capteurs résonants MEMS ;
la transmission d'un signal chirp périodique à au moins deux pixels d'un réseau de capteurs résonants MEMS (644), dans lequel chaque pixel comprend un absorbeur (204) sur un résonateur (202), dans lequel le résonateur (202) comprend un matériau piézoélectrique, dans lequel l'absorbeur est configuré pour absorber le rayonnement infrarouge incident, convertir le rayonnement infrarouge incident absorbé en chaleur, et changer une fréquence de résonance du résonateur (202), et dans lequel chacun des au moins deux pixels est configuré pour recevoir le signal chirp périodique ;
la détermination d'une fréquence de résonance déterminée de chaque pixel recevant le signal chirp périodique (646) ;
la détermination de la différence de la fréquence de résonance par rapport à la fréquence de résonance de référence correspondante de chaque pixel recevant le signal chirp périodique (648) ;
la détermination de la puissance de rayonnement infrarouge incidente sur chaque pixel recevant le signal chirp périodique (650) sur la base de la différence entre la fréquence de résonance déterminée et la fréquence de résonance de référence ; et
l'utilisation d'une transformée de Fourier rapide, FFT, avec un système détecteur de crête (318A) de telle sorte qu'avec chaque période chirp, une FFT est réalisée sur la sortie d'un système détecteur (316) pour chaque pixel, générant des compartiments de données, chaque compartiment correspondant à une plage de fréquences dans la plage de fréquences du signal chirp périodique.

8. Procédé selon la revendication 7, dans lequel la génération d'un signal chirp périodique comprend la génération d'un signal chirp périodique ayant une fréquence augmentant de manière linéaire au cours d'une période correspondante.

9. Procédé selon la revendication 7, dans lequel la détermination de la fréquence de résonance comprend :
l'identification d'un compte correspondant à une amplitude mesurée maximale détectée à partir d'un pixel ; et
la conversion du compte en une fréquence de résonance de ce pixel.

10. Procédé selon la revendication 7, dans lequel le procédé comprend en outre la détermination d'un facteur d'échelle pour chaque pixel en ayant un rayonnement infrarouge d'un niveau de puissance constant identique incident sur chaque pixel et si les pixels génèrent des fréquences de résonance différentes, le facteur d'échelle est calculé pour chaque pixel et multiplié ensuite par une tension ou un niveau de puissance détecté(e) ou une fréquence de résonance déterminée initiale correspondant au pixel respectif pour garantir que la même fréquence de résonance est déterminée pour chaque pixel.
